# EUROPÄISCHE PATENTSCHRIFT

(11) **EP 2 961 660 B1**
(45) Veröffentlichungstag und Bekanntmachung des Hinweises auf die Patenterteilung: **09.08.2017**
(21) Anmeldenummer: 14711696.6
(22) Anmeldetag: 26.02.2014
(51) Int. Cl.: B65B 51/14, B65B 51/30, B65B 57/02, B65B 1/02, B65B 51/32, B65B 43/30, B65B 43/04, B65B 51/10, B29C 65/18, B29C 65/22, B29C 65/00, B65B 51/22, B65B 61/14, B65D 30/20, B65B 7/02

(54) **PACKMASCHINE UND VERFAHREN ZUM FÜLLEN VON OFFENSÄCKEN**
PACKING MACHINE AND METHOD FOR FILLING OPEN SACKS
MACHINE D'EMBALLAGE ET UN PROCÉDÉ DE REMPLISSAGE DE SACS OUVERTS

(30) Priorität: 27.02.2013 DE 102013003223
(43) Veröffentlichungstag der Anmeldung: 06.01.2016
(73) Patentinhaber: Haver & Boecker OHG, 59302 Oelde (DE)
(72) Erfinder: SCHÜTTE, Thomas, 59558 Lippstadt (DE); HILLING, Thomas, 59269 Beckum (DE)
(74) Vertreter: BSB Intellectual Property Law
(86) Internationale Anmeldenummer: PCT/EP2014/053775
(87) Internationale Veröffentlichungsnummer: WO 2014/131811

(56) Entgegenhaltungen:
- WO-A1-2012/048837
- WO-A1-2012/052445
- CH-A- 491 003
- GB-A- 1 207 403
- US-A- 2 904 100
- US-A- 3 291 963
- US-A- 3 547 743
- US-A- 4 118 912

## Beschreibung

Die vorliegende Erfindung betrifft eine Packmaschine und ein Verfahren zum Füllen von Offensäcken mit Seitenfalten sowie einen Offensack. Einer solchen Packmaschine werden die mit Seitenfalten versehenen Offensäcke entweder vorgefertigt zugeführt oder aber die Herstellung der Säcke erfolgt in der Packmaschine selbst oder aber in einer der Packmaschine vorgelagerten oder zugeordneten Einrichtung. Dabei wird zur Herstellung der Offensäcke insbesondere ein Schlauchmaterial von einer Schlauchrolle abgerollt und es wird ein Abschnitt des Schlauchmaterials mit vorbestimmter Länge abgetrennt und mit einer Bodennaht versehen, bevor der Offensack durch das noch offene obere Einfüllende gefüllt wird. Nach dem Füllvorgang wird das Einfüllende dicht verschlossen. Packmaschinen, die in der Maschine selbst den Offensack bilden, füllen und anschließend verschließen, werden auch Form-Fill-Seal-Maschinen (FFS-Maschinen) genannt.

Aus der CH 4901 003 sind ein Verfahren und eine Vorrichtung zum Verbinden von unter Spannung stehenden Plastikfolien und zum Verschließen von aus solchen Folien vorgefertigten, gefüllten Plastikbeuteln zu einer Packung bekannt.

Die WO 2012/048837 A1 offenbart eine Packmaschine zum Füllen von Säcken, wobei die Säcke eine Sackwandung (2) aufweisen, die sich von einem ersten Ende zu einem zweiten Ende in Längsrichtung erstreckt, wobei die Säcke mit einem Produkt durch eine Einfüllöffnung an dem zweiten Ende der Sackwandung gefüllt werden, wobei eine Verschließeinrichtung zum Verschließen der Einfüllöffnung vorgesehen ist, mit welcher wenigstens an dem zweiten Ende der Sackwandung wenigstens ein Sackverschluss mit zwei oder mehr Verschlussnähten in die Sackwandung einbringbar ist, derart, dass die Verschlussstärke des Sackverschlusses zu dem zweiten Ende hin zunimmt.

Mit der WO 2012/052445 A1 ist eine Packmaschine zum Füllen von mit Seitenfalten versehenen Säcken bekannt geworden, wobei die Sackwandung der Säcke wenigstens teilweise aus einem Gewebe aus Folienstreifen besteht und wobei an einem Ende der Sackwandung eine Einfüllöffnung zum Befüllen vorgesehen ist. Dabei ist eine Verschließeinrichtung vorgesehen, welche beim Verschließen der Einfüllöffnung im Bereich der Seitenfalten eine um wenigstens 50 Kelvin höhere Schweißtemperatur als in einem Mittelbereich der Sackwandung erzeugt.

Die US 4,118,912 zeigt ein Verfahren zur Ausbildung eines Handgriffs in einem umgeschlagenen Ende des nach dem Füllen noch offenen Sackendes. Zunächst wird in das umgeschlagene Ende eine Verschlussnaht eingebracht. In den Überstand wird dann ein Sackgriff eingebracht.

Oft wird Schlauchfolie aus einem Kunststoffmaterial für das Schlauchmaterial eingesetzt. Das hat den Vorteil einer hohen Wasserdichtheit.

Nachteilig bei diesen bekannten Offensäcken ist es, dass bei Kontakt mit spitzen Gegenständen die Offensäcke aufreißen oder aufplatzen können. Neben dem Verlust des abgefüllten Produktes kann es zu einer erheblichen Staubbelastung der Umwelt kommen, die gegebenenfalls sogar zu einer Gesundheitsgefährdung von Personen führen kann.

Deshalb sind auch Offensäcke bekannt geworden, die eine höhere Reißfestigkeit aufweisen, um das Aufreißen der Sackwand zu verhindern. Solche Säcke bestehen beispielsweise aus einem Gewebematerial aus miteinander verwebten und meist gereckten Folienstreifen. Solche Gewebesäcke werden auch als Bändchengewebesäcke bezeichnet. Die Folienstreifen können dabei aus einem Material wie HDPE, LDPE oder PP (Polypropylen) bestehen, die eine relativ hohe Festigkeit aufweisen. Um das Gewebe staubdicht und gegebenenfalls wasser- und sogar luftdicht auszuführen, kann das Gewebe vor der Herstellung der Schlauchfolien mit Beschichtungen auf der Innen- und/oder Außenseite versehen werden, da ohne Beschichtungen an den einzelnen Gewebemaschen ein staub- oder luftdichter Abschluss nicht gewährleistet werden kann.

Offensäcke aus Bändchengewebe aus HDPE oder PP sind aber erheblich schwieriger zu verschweißen, wenn die Einfüllöffnung verschlossen werden soll.

Mit Seitenfalten versehene Offensäcke aus Schlauchfolie werden zur besseren Stapelfähigkeit oftmals mit Eckenabschweißungen versehen, um eine quaderförmige Gestalt des gefüllten Offensacks zu ermöglichen. Bei Offensäcken aus einer Polyethylenfolie werden bei der Verschweißung des offenen Einfüllendes nicht nur die beiden aufeinanderliegenden Folienlagen im mittleren Bereich des Offensacks, sondern auch die jeweils 4 aufeinander liegenden Lagen im Bereich der Seitenfalten miteinander verschweißt. Dadurch entstehen an den Enden des verschlossenen Offensacks praktische Griffe oder Griffmulden, an denen der gefüllte Offensack bequem gegriffen und getragen werden kann.

Bei Säcken aus Bändchengewebe aus HDPE oder PP ist die Verschweißung des Einfüllendes schwieriger, da die Schweißbarkeit des HDPE- oder PP-Materials schlechter ist. Regelmäßig wird deshalb bei Offensäcken aus Bändchengewebe nur die meist aus Polyethylen bestehende innere Lage miteinander verschweißt. Da die innere schweißfähige PE-Lage mit dem Bändchengewebe fest verbunden ist, führt auch eine solche Schweißung zu einem dichten Verschluss des Sacks. Nachteilig daran ist aber, dass in den äußeren Bereichen der Seitenfalten nur die vorderen und hinteren Lagen der Seitenfalten jeweils miteinander verbunden werden, nicht aber alle 4 Lagen der Seitenfalten. Es werden jeweils nur die beiden Lagen miteinander verbunden, bei denen die inneren Schichten aus Polyethylen oder dergleichen aufeinander liegen. Durch eine solche Verschweißung wird zwar der Sack dicht verschlossen, aber es fehlen die praktischen Griffmulden, um den Sack bequem tragen zu können. Zudem ist die Form des Sackes optisch beeinträchtigt, wenn die Seitenfaltenbereiche auseinanderklaffen. Dies wird insbesondere im Konsumgüterbereich als störend empfunden.

Eine mögliche Lösung, um solche Griffmulden zur Verfügung zu stellen, ist es, die Schweißtemperatur derart zu erhöhen, dass nicht nur die inneren Lagen der Offensäcke aus Bändchengewebe miteinander verbunden werden, sondern, dass eine Verschmelzung der Bändchengewebelagen miteinander erfolgt. Nachteilig an einer solchen Lösung ist aber, dass eine solche Schweißnaht hart und spröde ist. Das kann bei stoßartigen Belastungen zu einem Aufreißen der Schweißnaht und somit auch dem Austritt von Produkt führen.

Außerdem ist es bei vielen Packmaschinen gewünscht, je nach den aktuellen Erfordernissen unterschiedliche Sackware und z. B. PE-Folie und Bändchengewebe im Wechsel zu verarbeiten.

Es ist deshalb die Aufgabe der vorliegenden Erfindung, eine Packmaschine zur Abfüllung von Produkten in mit Seitenfalten versehene offene Säcke, sowie ein Verfahren zur Verfügung zu stellen, womit bei unterschiedlichen Materialen eine Griffmöglichkeit bei insbesondere auch ansprechender Optik zur Verfügung steht. Des Weiteren ist es die Aufgabe, einen entsprechenden Sack zur Verfügung zu stellen.

Diese Aufgabe wird gelöst durch eine Packmaschine mit den Merkmalen des Anspruchs 1, sowie durch ein Verfahren mit den Merkmalen des Anspruchs 11 und durch einen Offensack mit den Merkmalen des Anspruchs 14. Vorteilhafte Weiterbildungen sind Gegenstand der Unteransprüche. Weitere Vorteile und Merkmale ergeben sich aus der Beschreibung der Ausführungsbeispiele. Eine erfindungsgemäße Packmaschine dient zum Füllen von Produkten und insbesondere zum Füllen von Schüttgütern in mit Seitenfalten versehene Offensäcke. Die Packmaschine weist wenigstens eine Fülleinrichtung auf, um die Offensäcke von einem Einfüllende aus zu füllen. Es ist wenigstens eine Verschließeinrichtung vorgesehen, mit welcher nach dem Füllvorgang das Einfüllende mit wenigstens einer Schweißnaht in Querrichtung wenigstens im Wesentlichen vollständig dicht verschließbar ist. Es ist wenigstens eine zusätzliche Schweißeinrichtung vorgesehen. Die zusätzliche Schweißeinrichtung ist dazu geeignet und ausgebildet, zwei in Querrichtung seitlich voneinander beabstandete zusätzliche Haltenähte in die Seitenfalten der Offensäcke einzubringen. Dabei dienen die zusätzlichen Haltenähte insbesondere dazu, einen Griff bzw. eine Griffmöglichkeit zum Halten der gefüllten Offensäcke zur Verfügung zu stellen. Außerdem wird die Optik verbessert.

Die zusätzlichen Haltenähte sind etwa parallel zu der Schweißnaht ausgerichtet. Die zusätzliche Schweißeinrichtung ist vorzugsweise derart angeordnet und ausgebildet, dass die zusätzlichen Haltenähte etwa parallel oder parallel zu der Schweißnaht ausgerichtet sind. Insbesondere sind die zusätzliche Schweißeinrichtung und die das Einfüllende verschließende Verschließeinrichtung etwa parallel oder parallel zueinander angeordnet. Ein Winkel zwischen der Schweißnaht und der zusätzlichen Haltenaht ist vorzugsweise kleiner als 20° und insbesondere kleiner als 10° und besonders bevorzugt kleiner als 5°. Die zusätzliche Haltenaht ist quer zu einer Längskante des Offensacks ausgerichtet und ist vorzugsweise etwa senkrecht zu der Längskante des Offensacks ausgerichtet. Eine zusätzliche Haltenaht verläuft quer zu einer Längskante des Offensacks und schneidet die Schweißnaht nicht.

Die erfindungsgemäße Packmaschine hat viele Vorteile. Die erfindungsgemäße Packmaschine ist vielseitig verwendbar und kann für unterschiedlichste Sackmaterialien eingesetzt werden.

Vorzugsweise ist eine Auswahleinrichtung zur Auswahl eines Sackmaterials vorgesehen. Dann ist in Abhängigkeit von der Auswahl des Sackmaterials die zusätzliche Schweißeinrichtung aktivierbar. Wenn das Sackmaterial die zusätzliche Schweißeinrichtung nicht benötigt, wird durch die Auswahl des entsprechenden Sackmaterials die zusätzliche Schweißeinrichtung deaktiviert.

So kann mit der Auswahleinrichtung ein konventionelles Sackmaterial aus beispielsweise Polyethylenfolie ausgewählt werden, sodass eine konventionelle Verarbeitung ermöglicht wird. Wird hingegen mit der Auswahleinrichtung ein anderes Sackmaterial ausgewählt, welches nicht so leicht verschweißbar ist, so wird die zusätzliche Schweißeinrichtung aktiviert, sodass vor oder nach dem Verschweißen des Einfüllendes zusätzliche Haltnähte in die Seitenfalten der Offensäcke eingebracht werden. Da der Offensack schon durch die Verschließeinrichtung mit einer dem Sack abschließenden Schweißnaht vollständig dicht verschlossen wurde, können die Haltenähte die Funktion der Griffmöglichkeit übernehmen. Dabei muss bei der Einbringung der Haltenähte nicht darauf geachtet werden, die Haltenähte nicht zu spröde auszuführen. Da die Haltenähte regelmäßig eher statischen Belastungen ausgesetzt werden, wenn nämlich der Benutzer den gefüllten Offensack an den Enden ergreift, um ihn beispielsweise in den Einkaufswagen zu legen oder zum vorgesehenen Einsatzort zu transportieren, werden dynamische Belastungen auf die Haltenähte regelmäßig vermieden. Dynamische Belastungen sind aber insbesondere bei spröden Verbindungen kritisch. Den Austritt von abgefülltem Produkt aus dem Inneren des Offensacks vermeidet hingegen die Schweißnaht der Verschließeinrichtung, die auch für dynamische Belastungen ausgelegt werden kann.

Insbesondere werden mit der Packmaschine Schüttgüter abgefüllt. Die Packmaschine weist vorzugsweise ein Maschinengestell auf, welches als die Summe aller tragenden Teile der Packmaschine bezeichnet werden kann. Oftmals sind an dem Maschinengestell gehäusebildende Bleche oder flächige Materialien befestigt, um die Packmaschine nach außen hin abzuschließen. Das Maschinengestell kann auch eine Gehäuse-Funktion ausüben.

In allen Ausgestaltungen ist es besonders bevorzugt, dass die Fülleinrichtung dazu geeignet und ausgebildet ist, Offensäcke in einem Füllvorgang zu füllen, wobei die Offensäcke einen durch eine Sackwandung begrenzten Sackkörper mit zwei Enden aufweisen, bei denen sich der Sackkörper zwischen den beiden Enden über eine Länge erstreckt und quer dazu eine Breite aufweist, und bei denen das eine der Enden das Bodenende und das andere der Enden das Einfüllende ist, und bei denen in einem mittleren Abschnitt des Sackkörpers eine vordere und eine hintere Sackwandung vorgesehen sind, während an den Seitenfalten jeweils zwei vordere und zwei hintere Sackwandungen vorgesehen sind.

Insbesondere sind in den seitlichen Bereichen an den Seitenfalten die zwei vorderen Sackwandungen durch eine vordere Eckenschweißnaht verbunden und die zwei hinteren Sackwandungen werden durch eine hintere Eckenschweißnaht verbunden, um eine quaderförmige Form des Einfüllendes des Sackkörpers nach dem Füllvorgang zu ermöglichen. Die Eckenschweißnähte erstrecken sich schräg zu einer Längskante des Offensacks insbesondere von einer Längskante zu einer Seitenkante.

In allen Ausgestaltungen ist es bevorzugt, dass eine Steuereinrichtung zur Steuerung vorgesehen ist. Vorzugsweise ist die zusätzliche Schweißeinrichtung dazu ausgebildet, eine um wenigstens 40 Kelvin höhere Schweißtemperatur im Bereich der Seitenfalten zu erzeugen als die Verschweißeinrichtung zur Verschweißung des Einfüllendes im Bereich der Seitenfalten. Dabei ist zu berücksichtigen, dass auch die Verschließeinrichtung im Bereich der Seitenfalten eine um vorzugsweise wenigstens 40 Kelvin höhere Schweißtemperatur erzeugt als in einem zentralen Abschnitt des Offensacks, da in dem Bereich der Seitenfalten vier Lagen miteinander verschweißt werden und deshalb mehr Energie benötigt wird. Das bedeutet, dass die zusätzliche Schweißeinrichtung eine insbesondere wenigstens 60 Kelvin und vorzugsweise wenigstens 80 Kelvin höhere Schweißtemperatur erzeugt als die Verschließeinrichtung in dem zentralen Abschnitt des Offensacks erzeugt.

Durch die hohe Schweißtemperatur zur Erzeugung der Haltenähte wird eine Aufschmelzung nicht nur der Oberflächenschichten des Sackmaterials gewährleistet, sondern beispielsweise auch eine Aufschmelzung von möglicherweise eingesetzten Gewebelagen.

Vorzugsweise weist die zusätzliche Schweißeinrichtung zwei seitlich voneinander beabstandete Schweißbacken und/oder Schweißbacken auf. Die Schweißbacken sind separat ausgebildet und erzeugen jeweils eine Haltenaht in den Seitenfalten des Offensacks.

Die Schweißbacken der zusätzlichen Schweißeinrichtung weisen über ihrer Breite unterschiedliche Querschnitte und/oder Beschichtungen auf, um über der Breite der Schweißbacken unterschiedliche Temperaturen zu erzeugen. Die Schweißbacken erstrecken sich quer zur Längsrichtung des Offensacks über wenigstens einen Teil der Tiefe der Seitenfalten. Insbesondere weisen die Schweißbacken der zusätzlichen Schweißeinrichtung eine Breite auf, die kleiner als eine Tiefe der Seitenfalten der zu füllenden Offensäcke ist. Das bedeutet, dass die Haltenähte sich regelmäßig nicht über die vollständige Tiefe der Seitenfalten erstrecken. Dadurch kann gewährleistet werden, dass auch bei einer geringen seitlichen Verschiebung der Offensäcke die Schweißung der Haltenähte nur im Bereich der Seitenfalten erfolgt.

Vorzugsweise sind die Schweißbacken derart ausgestaltet, dass an den nach außen weisenden Abschnitten eine geringere Schweißtemperatur erzeugt wird als an wenigstens einem weiter innen gelegenen Abschnitt. Dadurch wird gewährleistet, dass an den äußeren Abschnitten die Haltenaht weniger spröde als weiter innen ist. Dadurch wird ein elastischer Bereich an der Haltenaht bereitgestellt, sodass die Gefahr des Aufreißens der Haltenaht von der seitlichen Kante des Offensacks aus erheblich reduziert wird. So kann die unter Umständen spröde Haltenaht auch dynamischen Belastungen z. B. im Moment des ersten Ziehens beim Ergreifen besser standhalten.

Es ist auch möglich, dass die zusätzliche Schweißeinrichtung wenigstens über die Sackbreite ein durchgehendes Schweißband aufweist, welches im Bereich der Seitenfalten einen größeren elektrischen Widerstand als in einem mittleren Abschnitt zwischen den Seitenfalten aufweist. Dabei ist der elektrische Widerstand des Schweißbandes über der Tiefe der Seitenfalten vorzugsweise in einem äußeren Abschnitt größer als in einem inneren Abschnitt. Insbesondere ist das Schweißband derart ausgestaltet, dass in einem zentralen oder mittleren Abschnitt zwischen den Seitenfalten keine oder nur eine schwache Schweißnaht erzeugt wird, während in den Bereichen der Seitenfalten eine erheblich stärkere Schweißnaht erzeugt wird, die alle Lagen der Seitenfalten miteinander verbindet. Dadurch, dass in einem äußeren Abschnitt der Haltenaht ein geringerer elektrischer Widerstand des Schweißbandes vorliegt, wird für einen elastischeren Rand der Haltenaht gesorgt.

Der elektrische Widerstand des Schweißbandes oder auch der Schweißbacken kann über unterschiedliche Querschnitte und/oder unterschiedliche Beschichtungen eingestellt werden. Beispielsweise können Beschichtungen aus unterschiedlichen Materialien und unterschiedlicher Dicke aufgetragen werden, um den Widerstand der Schweißbacke oder des Schweißbandes entsprechend zu beeinflussen. Mit kleinerem Widerstand sinkt die örtliche Schweißtemperatur, sodass die Schweißnaht entsprechend beeinflusst werden kann. Insbesondere ist die Schweißtemperatur im äußeren Abschnitt um mehr als 20 Kelvin und insbesondere um mehr als 40 Kelvin geringer als in dem inneren Abschnitt der Haltenaht. Die Schweißtemperatur innerhalb der Haltenaht liegt in einem Bereich, in welchem ein Bändchengewebe aufgeschmolzen werden kann.

Die Schweißbacken bzw. das Schweißband können periodisch oder kontinuierlich beheizt werden. Die Schweißbacke kann als Schweißblock ausgeführt sein.

Vorzugsweise ist wenigstens eine Eckenschweißeinrichtung vorgesehen, welche dazu geeignet und ausgebildet ist, wenigstens an dem Einfüllende Eckenschweißnähte in die Seitenfalten einzubringen. Dabei werden an den Eckenschweißnähten jeweils nur zwei Lagen der Seitenwandung miteinander verbunden.

Vorzugsweise ist eine Sackbildungseinrichtung vorgesehen, welche dazu geeignet und ausgebildet ist, Offensäcke aus einem Sackschlauch herzustellen und zu vereinzeln.

Das erfindungsgemäße Verfahren dient zum Füllen von Produkten und insbesondere von Schüttgütern in mit Seitenfalten versehene Offensäcke, wobei die Offensäcke mit einer Fülleinrichtung von einem Einfüllende aus gefüllt werden. Nach dem Füllvorgang wird das Einfüllende mit wenigstens einer Schweißnaht in Querrichtung wenigstens im Wesentlichen vollständig dicht verschlossen. Mit einer zusätzlichen Schweißeinrichtung werden wenigstens zwei voneinander in Querrichtung seitlich beabstandete zusätzliche und etwa parallel zu der Schweißnaht ausgerichtete Haltenähte in die Seitenfalten der Offensäcke eingebracht.

Das erfindungsgemäße Verfahren hat viele Vorteile, da es durch das Einbringen der Haltenähte in die Seitenfalten eine Griffmöglichkeit zum Halten der gefüllten Offensäcke zur Verfügung stellt. Auch die Optik der fertig gefüllten Offensäcke wird verbessert.

In allen Ausgestaltungen ist es besonders bevorzugt, dass die zusätzlichen Haltenähte nach außen hin elastischer ausgebildet werden. Dadurch wird dort, wo der Finger oder die Hand eines Benutzers den gefüllten Offensack ergreift, die Haltenaht elastischer und somit auch bei dynamischen Belastungen belastbarer ausgebildet, sodass ein Einreißen der Haltenaht verhindert wird. Aber selbst bei einem Einreißen der Haltenaht bleibt der gefüllte Offensack regelmäßig verschlossen.

Vorzugsweise kann mit einer Auswahleinrichtung ein Sackmaterial ausgewählt werden. In Abhängigkeit von der Auswahl des Sackmaterials wird die zusätzliche Schweißeinrichtung aktiviert. Durch die Auswahleinrichtung kann die zusätzliche Schweißeinrichtung aktiviert oder abgeschaltet werden, sodass unterschiedlichste Typen von Seitenfaltensäcken verarbeitbar sind.

Der erfindungsgemäße Offensack weist einen Sackkörper mit zwei Enden auf, wobei sich der Sackkörper zwischen den beiden Enden über eine Länge erstreckt und quer dazu eine Breite aufweist. Der Sackkörper wird durch eine Sackwandung begrenzt. Das eine der Enden ist das Bodenende bzw. der Sackboden und das andere Ende ist das Einfüllende. Wenigstens an dem Einfüllende des Sackkörpers sind in seitlichen Bereichen Seitenfalten in der Sackwandung vorgesehen, sodass an dem Einfüllende des Sackkörpers in einem mittleren Abschnitt des Sackkörpers eine vordere und eine hintere Sackwandung vorgesehen sind, während in den seitlichen Bereichen an den Seitenfalten jeweils zwei vordere und zwei hintere Sackwandungen vorgesehen sind. Das Bodenende ist wenigstens im Wesentlichen verschlossen und das Einfüllende ist in Querrichtung über der vollständigen Breite wenigstens im Wesentlichen mit wenigstens einer Schweißnaht vollständig verschlossen. Wenigstens an dem Einfüllende ist wenigstens in den seitlichen Bereichen in den Seitenfalten wenigstens eine zusätzliche und etwa parallel zu der Schweißnaht ausgerichtete Haltenaht in Querrichtung vorgesehen, an welcher die zwei vorderen Sackwandungen und die zwei hinteren Sackwandungen alle miteinander verbunden sind.

Der erfindungsgemäße Offensack hat viele Vorteile, da er neben einer zuverlässigen Funktion auch praktische Haltenähte zur Verfügung stellt. Eine solche Haltenaht ist insbesondere als Schweißnaht ausgeführt und kann insofern auch als Halteschweißnaht bezeichnet werden. Die Haltenähte stellen einen praktischen Griff oder eine Fingermulde zum Halten des Sackkörpers zur Verfügung.

Vorzugsweise sind in den seitlichen Bereichen die zwei vorderen Sackwandungen durch eine vordere Schweißnaht miteinander verbunden und die zwei hinteren Sackwandungen sind durch eine hintere Eckenschweißnaht miteinander verbunden, um eine quaderförmige Form des Einfüllendes des Sackkörpers zu ermöglichen.

Besonders bevorzugt sind an beiden Enden des Offensacks jeweils Eckenschweißnähte vorgesehen, sodass eine insgesamt quaderförmige Form des gefüllten Offensacks ermöglicht wird. Erfindungsgemäß ist an beiden Enden in jeweils beiden seitlichen Bereichen der Seitenfalten jeweils wenigstens eine zusätzliche Haltenaht vorgesehen. Besonders bevorzugt sind insgesamt vier Haltenähte vorgesehen, nämlich an den vier Ecken des gefüllten Offensacks jeweils eine. Jede Haltenaht ist insbesondere als Schweißnaht ausgeführt.

Die zusätzlichen Haltenähte weisen vorzugsweise in Querrichtung des Sackkörpers wenigstens zwei Nahtabschnitte unterschiedlicher Intensität auf. Das bedeutet, dass jeder Haltenaht wenigstens zwei Nahtabschnitte unterschiedlicher Intensität und/oder Elastizität aufweist. Vorzugsweise ist die zusätzliche Haltenaht zu dem seitlichen Ende des Sackkörpers hin elastischer ausgebildet. Das kann dadurch realisiert werden, dass der näher zum seitlichen Ende des Sackkörpers vorgesehene Nahtabschnitt mit einer geringeren Schweißtemperatur erzeugt wird als der weiter hinten vorgesehene Nahtabschnitt der zusätzlichen Haltenaht.

In allen Ausgestaltungen ist es bevorzugt, dass die zusätzliche Haltenaht näher an dem Einfüllende vorgesehen ist als die Schweißnaht zum Verschließen des Einfüllendes. Das hat den Vorteil, dass die zusätzliche Haltenaht in einem Bereich vorgesehen ist, der von dem abgefüllten Produkt abgetrennt ist. Selbst ein Aufreißen der Haltenaht kann dann nicht zu einem Austritt von abgefülltem Produkt führen.

Es ist auch möglich und bevorzugt, dass die zusätzliche Schweißnaht zum Verschließen des Einfüllendes näher an dem Einfüllende vorgesehen ist als die Haltenaht. Das ist insbesondere dann möglich, wenn die zusätzliche Schweißnaht sich innerhalb des von der Eckenschweißnaht abgetrennten Bereichs befindet und die Eckenschweißnaht nicht kreuzt. Dann kann auch bei einem Aufreißen der gegebenenfalls spröden Haltenaht kein in den Offensack abgefülltes Produkt nach außen austreten. Der Bereich der Haltenaht ist durch die Eckenschweißnaht von dem Sackinneren abgetrennt.

Die Sackwandung des Sackkörpers besteht aus einer Außenlage, wie z. B. einem Bändchengewebe, und aus wenigstens einer damit verbundenen Beschichtungslage. Die Beschichtungslage ist auf der Innenseite des Sackkörpers angeordnet. Vorzugsweise sind an der Schweißnaht zum Verschließen der Einfüllöffnung die Beschichtungslagen der vorderen und der hinteren Sackwandung miteinander verschweißt. Insbesondere sind dort nur die Beschichtungslagen der vorderen und der hinteren Sackwandungen miteinander verschweißt.

An der zusätzlichen Haltenaht werden die Bändchengewebe der beiden vorderen und der beiden hinteren Sackwandungen miteinander wenigstens zu einem erheblichen Teil miteinander zu einer Schmelzverbindungsnaht verschmolzen. Das bedeutet, dass nicht nur die Beschichtungslagen miteinander verschweißt werden, sondern das auch die Bändchengewebelagen aller aufeinander liegenden Sackwandungen zu einem erheblichen Teil miteinander verschmolzen werden, um eine alle Lagen verbindende zusätzliche Haltenaht zur Verfügung zu stellen. Dabei ist die Schmelzverbindungsnaht bevorzugt nur in dem Bereich der Seitenfalten vorhanden.

Weitere Vorteile und Merkmale der vorliegenden Erfindung ergeben sich durch die Ausführungsbeispiele, welches im Folgenden mit Bezug auf die beiliegenden Figuren erläutert wird.

In den Figuren zeigen:
- Fig. 1: eine schematische Seitenansicht einer erfindungsgemäßen Packmaschine;
- Fig. 2: die zusätzliche Schweißeinrichtung der Packmaschine nach Fig. 1;
- Fig. 3: eine schematische Seitenansicht der Verschließeinrichtung und der zusätzlichen Schweißeinrichtung;
- Fig. 4: eine schematische Draufsicht auf einen verschlossenen Offensack mit Seitenfalten;
- Fig. 5: eine vergrößerte Ecke des Offensacks nach Fig. 4;
- Fig. 6: einen weiteren verschlossenen Offensack;
- Fig. 7: die Struktur eines Sackmaterials; und
- Fig. 8: eine schematische perspektivische Ansicht eines gefüllten Offensacks.

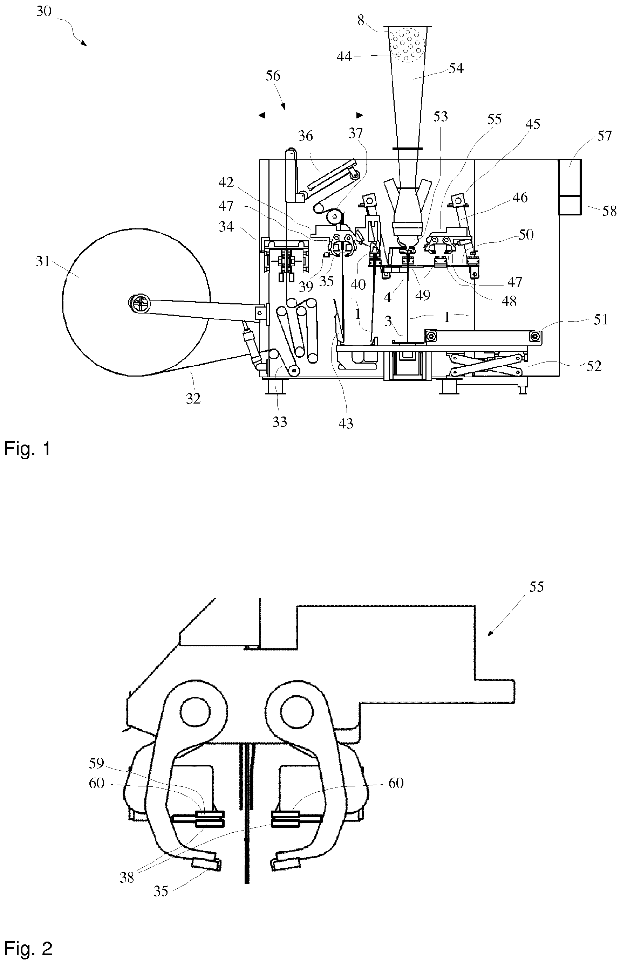

Die in Fig. 1 in einem schematischen Querschnitt dargestellte Packmaschine 30 dient zum Füllen von Offensäcken 1 mit Produkten 8. Ein solches Produkt kann beispielsweise das oben in der Produktzufuhr 54 schematisch dargestellte Schüttgut mit Partikeln 44 sein. Möglich ist es aber auch, andere Produkte 8 wie z. B. flüssige oder pastöse Produkte in die Säcke 1 einzufüllen.

Die Packmaschine 30 ist als FFS-Packmaschine ausgeführt und weist einen Folienvorrat 31 mit wenigstens einer Schlauchrolle auf. In dem Folienvorrat 31 befindet sich aufgewickelte Schlauchfolie 32, die zur Herstellung der Säcke 1 dient. Durch die Bereitstellung eines Folienvorrates 31 mit einer oder mehreren Schlauchrollen können je nach Bedarf Offensäcke 1 hergestellt werden. Dabei ist insbesondere die Länge der jeweiligen Säcke flexibel variierbar und kann an die jeweils gewünschte Abfüllmenge einfach angepasst werden.

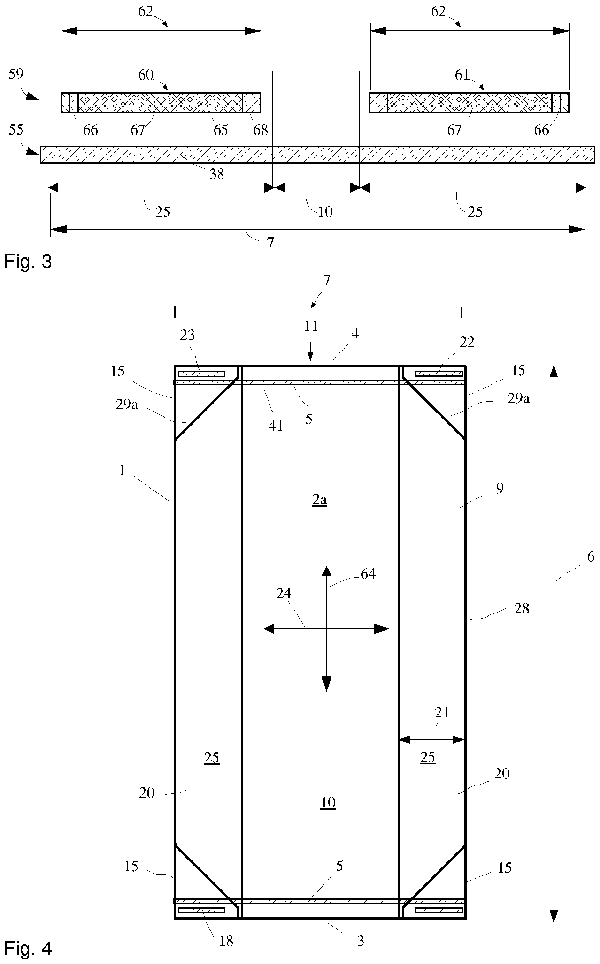

Die von der Folienrolle des Folienvorrates 31 abgewickelte Schlauchfolie 32 gelangt über den Folienspeicher 33 in das Innere der Packmaschine 30 hinein und wird zur Eckenschweißeinrichtung 34 geleitet. In der Eckenschweißeinrichtung 34 können bei Bedarf Eckenschweißungen vorgenommen werden, die als Eckenschweißnähte 29a beispielsweise in Fig. 4 eingezeichnet sind. Über solche Eckenschweißnähte bzw. Eckenschweißungen 29a wird eine quaderförmige Gestalt des gefüllten Offensacks 1 erzielt, sodass der Sack einfach und in optisch ansprechender Weise stapelbar ist.

Nach dem möglichen Anfertigen der Eckenschweißnähte 29a, 29b läuft die Schlauchfolie 32 mit den in den Seitenfalten 20 vorgenommenen Eckenschweißnähten dem Sacklängenausgleich 36 zu, der zum Ausgleich des getakteten Betriebes der Packmaschine 30 dient. Durch den Sacklängenausgleich 36 kann die Folienrolle des Folienvorrats 31 gleichmäßig kontinuierlich abgewickelt werden, während im Inneren der Packmaschine ein getakteter Betrieb zum Anfertigen der Offensäcke 1 und zum Füllen der Offensäcke 1 und anschließendem Verschließen vorliegt.

Der Folienantrieb 37 dient zum Transport der Schlauchfolie 32 und kann gleichzeitig zur Streckenerfassung dienen, sodass die Steuereinrichtung 57 der Packmaschine 30 jederzeit Informationen über die Position eines bzw. jedes Schlauchstücks relativ zur Folienrolle hat.

Im Weiteren wird die Schlauchfolie 32 der Verschließeinrichtung 42 zugeführt, wo zunächst die Schlauchfolie mit der Klemmeinrichtung 35 geklemmt wird, bevor (vgl. Fig. 2) mit den Schweißbacken 38 ein Sackverschluss als Bodenverschluss in die Schlauchfolie 32 eingebracht wird. Dabei erstreckt sich die Schweißnaht 5 in Querrichtung 24 über die Breite 7 des Offensacks 1.

Die Auswahleinrichtung 58 dient zur Auswahl des Sackmaterials 12. In Abhängigkeit von der Auswahl wird die zusätzliche Schweißeinrichtung 59 aktiviert oder deaktiviert. Möglich ist auch eine automatische Erkennung des Sackmaterials 12 oder eine externe Signalübermittlung.

Wie in Fig. 2 vergrößert abgebildet ist, ist ein Schneidmesser 39 vorgesehen, welches nach dem Erzeugen der Schweißnaht 5 an dem Bodenende bzw. Sackboden 3 und einer Weitertaktung des Schlauchmaterials die Schlauchfolie im Bereich des zweiten Endes 4 des entstehenden Sacks durchtrennt. Der als Offensack 1 ausgebildete Sack weist nun schon einen Sackboden 3 auf und ist am oberen Ende bzw. Einfüllende 4 mit einer Einfüllöffnung 11 versehen. Die Einfüllöffnung 11 kann sich über die gesamte Breite 7 des Sacks erstrecken. Möglich ist es aber auch, dass sich die Einfüllöffnung 11 praktisch im Wesentlichen nur über den zentralen Abschnitt 10 zwischen den Seitenfalten 20 erstreckt, wenn dort die Seitenfaltenbereiche mit Eckenschweißnähten 29a, 29b abgeschweißt sind.

Anschließend kann die Schweißnaht 5 am Sackboden 3 über eine Kühleinrichtung 43 gekühlt werden, um eine ausreichende Stabilität bei einem hohen Durchsatz zu erzielen.

Über einen Pendeltransport 45 wird der Sack 1 mittels der schwenkbaren Pendelarme 46 weiter transportiert und durch einen Sacköffner 40 geöffnet. Beim nächsten Takt wird der Sack 1 mit der Einfüllöffnung 11 an die Fülleinrichtung 53 bzw. an deren Füllstutzen 53 angehängt und mit dem Produkt 8 aus der Produktzufuhr 54 gefüllt. Dabei kann die Füllung über ein Nettoverfahren erfolgen, bei dem vor der Zufuhr eine bestimmte Menge an Produkt abgewogen und anschließend dem Offensack zugeführt wird. Auch andere Füllverfahren sind denkbar.

Nach dem Füllvorgang wird der Offensack 1 über den Pendeltransport 45 der Verschließeinrichtung 55 zugeführt, die wiederum über eine Klemmeinrichtung 35 und Schweißbacken 38 verfügt.

An der Verschließeinrichtung 55 wird das Einfüllende bzw. das zweite Ende 4 des Offensacks 1 mit einer Schweißnaht 5 bzw. einer Kopfnaht 41 verschlossen. Die Schweißnaht 5 erstreckt sich wiederum in Querrichtung 24 vorzugsweise über die gesamte Breite 7 des Sacks 1 und wenigstens über die Breite der Einfüllöffnung und ermöglicht einen dichten Abschluss des Sackinneren.

Die in Figur 2 abgebildete Verschließeinrichtung 55 umfasst eine Klemmeinrichtung 35 zum Klemmen der Sackwandung 2a, 2b und eine Schweißeinrichtung mit Schweißbacken 38 zum Verschweißen der Einfüllöffnung 11 bzw. zum Verschweißen des Einfüllendes 4 nach abgeschlossenem Füllvorgang. Dazu erstrecken sich die Schweißbacken 38, die auch als Schweißbänder ausgeführt sein können, über mehr als die vollständige Breite 7 des gefüllten Offensacks, sodass eine durchgängige und vollständige Verschließung des Offensacks 1 ermöglicht wird. Es ist auch möglich, mehrere benachbarte oder parallele Schweißnähte einzubringen.

Hier ist oberhalb der Schweißbacken 38 die zusätzliche Schweißeinrichtung 59 vorgesehen, die Schweißbacken 60 und 61 umfasst. Die Schweißbacken 61 sind in der Ansicht gemäß Figur 2 hinter den Schweißbacken 60 angeordnet und deshalb in der Ansicht nach Figur 2 nicht sichtbar.

Die Schweißbacken 60 und 61 sind voneinander in Querrichtung 24 des Offensacks 1 beabstandet angeordnet, sodass die Schweißbacken 60 und auch die Schweißbacken 61 jeweils in den Bereichen 25 der Seitenfalten 20 vorgesehen sind (vgl. Fig. 4).

Die Schweißbacken 38 der Verschließeinrichtung 55 dienen zum dichten Verschluss des Offensacks 1, während die Schweißbacken 60 und 61 der zusätzlichen Schweißeinrichtungen 59 dazu dienen, Haltenähte 22 und 23 an den Sackenden vorzusehen, die einen Griff 15 und eine Griffmöglichkeit an den Sackenden zur Verfügung stellen. Die Verschließeinrichtung 42 ist analog aufgebaut.

Figur 3 zeigt eine stark schematische Vorderansicht der Verschließeinrichtung 55, in der die durchgehende Schweißbacke 38 und auch die Schweißbacken 60 und 61 der zusätzlichen Schweißeinrichtungen 59 deutlich erkennbar sind.

Während sich die Schweißbacke 38 zum Verschließen des Einfüllendes 4 des Offensacks 1 über mehr als die Breite 7 des Offensacks 1 erstreckt, sind die Schweißbacken 60 und 61 jeweils innerhalb der jeweiligen Bereiche 25 der Seitenfalten 20 vorgesehen. Die Schweißbacken 60 und 61 weisen jeweils eine gleiche Breite 62 auf und sind über ihrer Breite 62 in unterschiedliche Schweißabschnitte 66 und 67 und gegebenenfalls 68 aufgeteilt. Während zum Außenrand hin äußere Abschnitte 66 vorgesehen sind, sind weiter nach innen Abschnitte 67 angeordnet. In den Abschnitten 67 wird eine deutlich höhere Schweißtemperatur erzielt als in den äußeren Abschnitten 66. Es ist möglich, dass die äußeren Abschnitte 66 nochmals in Unterabschnitte unterteilt sind, wie es in Figur 3 angedeutet ist, um einen kontinuierlicheren bzw. sanften Übergang zu ermöglichen.

Ein wesentlicher Unterschied des äußeren Abschnittes 66 zu dem weiter innen angeordneten Abschnitt 67 ist, dass dort im äußeren Abschnitt 66 die Schweißtemperatur erheblich reduziert ist. Während im Abschnitt 67 eine besonders hohe Schweißtemperatur vorliegt, die zu einer Verschmelzung aller vier dort vorhandenen Lagen der Sackwandung führt, wird an den äußeren Abschnitten 66 die Schweißtemperatur erheblich reduziert. Das führt zu einer elastischeren Schweißnaht am äußeren Ende der Haltenähte 22 und 23. Durch die elastischere Ausbildung der Haltenähte 22 und 23 am äußeren Rand wird der Griff 15 auch für dynamische Belastungen haltbarer. Die Gefahr des Einreißens vom äußeren Rand her wird effektiv reduziert. Analog dazu kann auch der optionale Abschnitt 68 eine geringere Schweißtemperatur aufweisen.

Hier beim Ausführungsbeispiel gemäß Figur 3 erstrecken sich die Schweißbacken 60 und 61 jeweils nur innerhalb des Bereichs 25 der Seitenfalten 20. Möglich ist es aber auch, dass durchgehende Schweißbänder eingesetzt werden, die sich über die vollständige Breite 7 des Offensacks 1 erstrecken. Dann wird durch entsprechende Querschnitte und/oder Beschichtungen und/oder Materialien des optional auch durchgehenden Schweißbandes 65 dafür gesorgt, dass in dem zentralen Abschnitt 10 keine Schweißnaht erzeugt wird. Der Sinn der Haltenähte 22 und 23 besteht darin, in den durch Eckenschweißungen 29a und 29b abgetrennten Bereichen Verschmelzungsnähte zur Verfügung zu stellen, die auch oder sogar sehr spröde ausgestaltet sein können. Selbst wenn diese Haltenähte 22 und 23 reißen, kann noch kein Material aus dem Inneren des gefüllten Offensacks 1 austreten, da die Eckenabschweißungen 29a bzw. 29b und/oder die die Einfüllöffnungen verschließende Schweißnaht 5 das Innere des Sacks nach außen abdichten.

Figur 4 zeigt eine Draufsicht auf einen schematisch dargestellten Offensack 1, der sich von einem ersten Ende 3 zu einem zweiten Ende 4 über eine Länge 6 erstreckt. Der Offensack 1 weist in Querrichtung 24 eine Breite 7 auf. An dem ersten Ende bzw. dem Bodenende 3 ist eine den Boden verschließende Schweißnaht 5 vorgesehen. An dem zweiten Ende 4 ist eine als Kopfnaht 41 ausgebildete Schweißnaht 5 vorgesehen, die das Einfüllende 11 dicht verschließt. An allen vier Ecken des Offensacks 1 sind in den Seitenfalten 20 Eckenschweißungen 29a, 29b vorgesehen, die für eine quaderförmige Ausgestaltung des gefüllten Offensacks 1 sorgen. Zwischen den jeweiligen Enden 3, 4 des Sacks und den jeweiligen Schweißnähten 5 sind Haltenähte 22 und 23 in den Bereichen 25 der Seitenfalten 20 angeordnet. Die Haltenähte 22 und 23 erstrecken sich quer zur Längsrichtung 64 und sind hier nur im Bereich der Seitenfalten 20 vorgesehen. Deshalb ist die Breite 62 der Haltenähte 22 und 23 geringer als die Tiefe 21 der Seitenfalten 20. Die Haltenähte 22 und 23 sind in der Regel etwa parallel und hier parallel zu den Schweißnähte 5 ausgerichtet. Die Haltenähte 22 und 23 befinden sich weiter außen als die Schweißnähte 5. Dadurch verschließen die Schweißnähte 5 den Offensack 1 dicht. Die Haltenähte 22 und 23 stellen Griffe zur Verfügung. Die Haltenähte 22 und 23 können spröder sein als die Schweißnähte 5. Da die Haltenähte 22 und 23 weiter außen sind, bleibt das Innere des verschlossenen Offensacks 1 auch dann noch verschlossen, selbst wenn eine der Haltenähte 22 und 23 reißen sollte.

Der Sackkörper 8 weist eine Längsseite 28 und eine Querseite auf und wird durch eine vordere Sackwandung 2a und eine hintere Sackwandung 2b (in Figur 4 nicht sichtbar) begrenzt. An den vier Ecken des Sackkörpers 9 sind Griffe bzw. Griffmöglichkeiten 15 vorgesehen, die durch die Haltenähte 22 und 23 entstehen. Während sich die Schweißnähte 5 an den Enden 3 und 4 im Bereich 25 der Seitenfalten 20 jeweils nur durch jeweils zwei Lagen erstrecken, sind die Haltenähte 22 und 23 durch solche Schweißtemperaturen erzeugt, dass sich dort alle vier Lagen der Sackwandung 2a, 2b miteinander verbinden und insbesondere dort miteinander wenigstens teilweise verschmelzen.

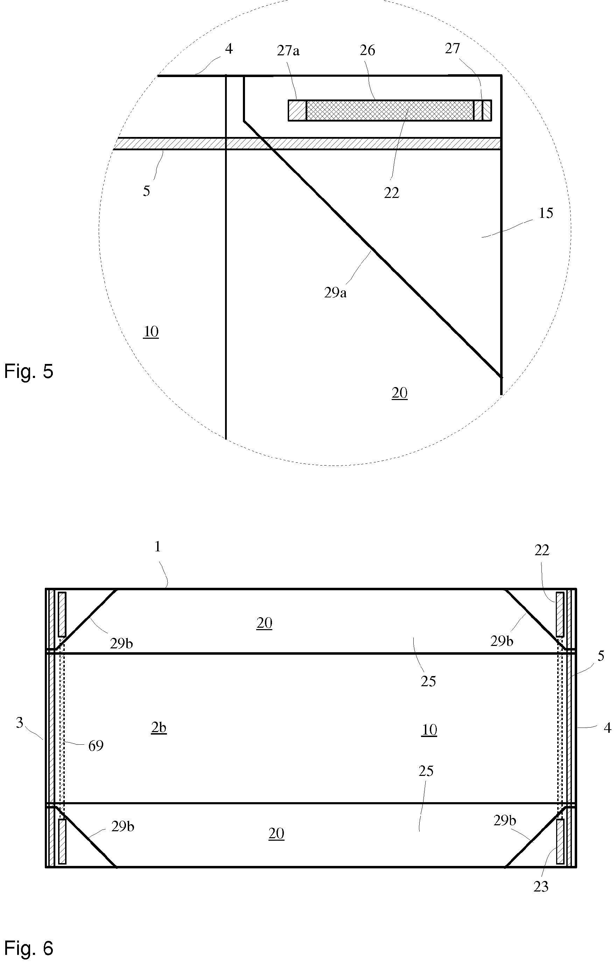

Figur 5 zeigt einen vergrößerten Ausschnitt aus der rechten oberen Ecke des Offensacks 1 aus der Darstellung gemäß Figur 4. Die Haltenaht 22 erstreckt sich nur innerhalb des Bereichs 25 der Seitenfalte 20 und hier auch nur innerhalb des von der Eckenschweißnaht 29a abgetrennten Bereichs. Die Haltenaht 22 verfügt hier über verschiedene Schweißabschnitte 26 und 27 und gegebenenfalls 27a, wobei der äußerste Abschnitt 27 nahe der Außenwandung und nahe der Seitenkante 28 elastischer ausgebildet ist als der weiter innenliegende Schweißabschnitt 26. Die unterschiedliche Elastizität wird hier durch unterschiedliche Schweißtemperaturen erzeugt, wobei im Bereich des Schweißabschnittes 27 geringere Schweißtemperaturen vorliegen als im Bereich des Schweißabschnittes 26. Die Haltenaht 22 stellt einen Griff 15 an dem durch die Eckenschweißnähte 29a, 29b abgetrennten Bereichs des Offensacks 1 dar.

In dem Ausführungsbeispiel gemäß Figur 5 ist die Haltenaht 22 näher am Ende 4 des Offensacks 1 angeordnet als die den Innenraum verschließende Schweißnaht 5.

Figur 6 zeigt ein anderes Ausführungsbeispiel, bei dem der Offensack von seiner hinteren Seite aus dargestellt ist. Deshalb sind in der Darstellung gemäß Figur 6 die hinteren Eckenschweißnähte 29b und die hintere Sackwandung 2b zusehen, während die vorderen Eckenschweißnähte 29a nicht zu sehen sind.

Auch der Offensack 1 gemäß Figur 6 weist Seitenfalten 20 an entsprechenden Bereichen 25 und einen zentralen Abschnitt 10 auf. An dem ersten Ende 3 und an dem zweiten Ende 4 ist der gefüllte Offensack 1 jeweils durch Schweißnähte 5 verschlossen. Haltenähte 22 und 23 verbinden die jeweils vier Lagen der Sackwandungen 2a, 2b fest miteinander und stellen somit Griffe an den Ecken des Offensacks 1 zur Verfügung. Hier sind die Haltenähte 22 und 23 weiter von den Enden 3, 4 beabstandet als die den Innenraum verschließenden Schweißnähte 5. Aber auch hier stellt ein Aufreißen der Haltenähte 22 und 23 keine Gefahr für ein eventuelles Austreten von Material dar, da die Haltenähte 22 und 23 innerhalb des durch die Schweißnähte 29a, 29b abgetrennten Bereiches vorgesehen sind. Im gestrichelt eingezeichneten Abschnitt 69 können allenfalls Anhaftungen der Sackwandungen 2a und 2b entstehen, die aber nicht zur Übertragung von Kräften dienen.

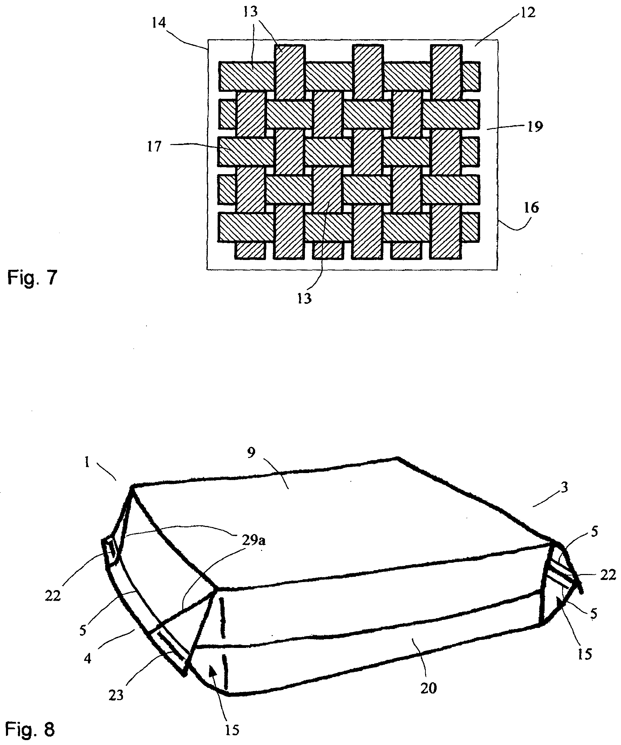

Figur 7 zeigt in einer stark schematischen Ansicht einen Abschnitt der Sackwandung eines Offensacks 1. Das Sackmaterial 12 des Offensackes 1 besteht hier aus einer Außenlage 14, z. B. einem Bändchengewebe 14 aus Folienstreifen 13. Zur Verdeutlichung vergrößert dargestellt sind zwischen den einzelnen Folienstreifen 13 freie Bereiche, die durch eine Beschichtungslage 19 auf der Innenseite 16 der Außenlage 14 bzw. des Bändchengewebes abgedichtet werden. Ein so hergestellter Offensack 1 aus Bändchengewebe 14 weist eine hohe Belastbarkeit auf und ist durch die Beschichtungslage 19 an der Innenseite 16 bedingt auch verschweißbar.

Figur 8 zeigt einen gefüllten Offensack 1, der sich von einem Ende 3 zu einem Ende 4 erstreckt. In einem mittleren Bereich sind die Seitenfalten 20 durch das eingefüllte Produkt auseinander gefaltet und insofern praktisch nicht (mehr) vorhanden. An den Enden 3, 4 sind Schweißnähte 5 zum Verschließen des Offensacks 1 vorgesehen. Haltenähte 22 und 23 dienen dazu, Griffe 15 an den vier Ecken des Offensacks 1 zur Verfügung zu stellen.

Insgesamt stellt die Erfindung eine vorteilhafte Packmaschine 30 zur Verfügung, mit der z. B. an einer Auswahleinrichtung 58 das Sackmaterial 12 der zu füllenden Offensäcke 1 ausgewählt werden kann. In Abhängigkeit von der Auswahl des Sackmaterials wird eine zusätzliche Schweißeinrichtung 59 aktiviert, die beispielsweise bei Abfüllung von Produkten 8 in aus Bändchengewebe 14 bestehende Offensäcke dafür sorgt, dass an den Ecken der gefüllten Offensäcke 1 Griffe 15 bzw. Griffmöglichkeiten entstehen, die ein bequemes Transportieren ermöglichen und auch für ein optisch ansprechendes Äußeres sorgen, da die Ecken nicht von dem Sackkörper 9 abstehen.

Wird aufgrund des zu verarbeitenden Sackmaterials 12 der Einsatz der zusätzlichen Schweißeinrichtung 59 nicht benötigt, kann diese deaktiviert werden.

Es ist auch möglich, dass eine automatische Detektion des Sackmaterials 12 erfolgt und in Abhängigkeit von der Detektion die zusätzliche Schweißeinrichtung aktiviert wird oder aber deaktiviert wird, wenn durch die Schweißnaht 5 bereits sichergestellt ist, dass alle vier Lagen in den Bereichen 25 bereits miteinander verbunden sind.

Insgesamt stellt die Erfindung eine vorteilhafte Packmaschine und ein vorteilhaftes Verfahren zum Füllen von Produkten in Offensäcke sowie einen vorteilhaften Offensack zu Verfügung.

**Bezugszeichenliste:**

| | | | |
|---|---|---|---|
| 1 | Offensack | 35 | Klemmeinrichtung |
| 2a | Sackwandung | 36 | Sacklängenausgleich |
| 2b | Sackwandung | 37 | Folienantrieb |
| 3 | Bodenende, Sackboden, erstes Ende | 38 | Schweißbacke |
| | | 39 | Schneidmesser |
| 4 | Einfüllende, 2. Ende | 40 | Sacköffner |
| 5 | Schweißnaht | 41 | Kopfnaht |
| 6 | Länge | 42 | Verschließeinrichtung |
| 7 | Breite | 43 | Kühleinrichtung |
| 8 | Produkt, Schüttgut | 44 | Partikel |
| 9 | Sackkörper | 45 | Pendeltransport |
| 10 | zentraler Abschnitt | 46 | Pendelarm |
| 11 | Einfüllöffnung | 47 | Schweißbacke |
| 12 | Sackmaterial | 48 | Klemmeinrichtung |
| 13 | Folienstreifen | 49 | Foliengreifer |
| 14 | Außenlage | 50 | Pendelstange |
| 15 | Griff | 51 | Austrageband |
| 16 | Innenseite | 52 | Scherentisch |
| 17 | Außenseite | 53 | Fülleinrichtung, Füllstutzen |
| 18 | Schmelzverbindungsnaht | | |
| 19 | Beschichtungslage | 54 | Produktzufuhr |
| 20 | Seitenfalte | 55 | Verschließeinrichtung |
| 21 | Tiefe von 20 | 56 | Sackbildungseinrichtung |
| 22 | Haltenaht | 57 | Steuereinrichtung |
| 23 | Haltenaht | 58 | Auswahleinrichtung |
| 24 | Querrichtung | 59 | zusätzliche Schweißeinrichtung |
| 25 | Bereich von 20 | | |
| 26 | Schweißabschnitt von 22 | 60 | Schweißbacke |
| 27 | Schweißabschnitt von 22 | 61 | Schweißbacke |
| 28 | Längsseite | 62 | Breite von 60, 61 |
| 29a | Eckenschweißnaht | 64 | Längsrichtung |
| 29b | Eckenschweißnaht | 65 | Schweißband, Schweißblock |
| 30 | Packmaschine | | |
| 31 | Folienvorrat/Folienrolle | 66 | äußerer Abschnitt |
| 32 | Schlauchfolie | 67 | innerer Abschnitt |
| 33 | Folienspeicher | 68 | Abschnitt |
| 34 | Eckenschweißeinrichtung | 69 | Abschnitt |

## Patentansprüche

1. Packmaschine (30) zum Füllen von Produkten (8) in mit Seitenfalten (20) versehene Offensäcke (1), mit einer Fülleinrichtung (53), um die Offensäcke (1) von einem Einfüllende (4) aus zu füllen, wobei die Offensäcke einen Sackkörper (9) mit einer Sackwandung (2a, 2b) aufweisen und wobei die Sackwandung des Sackkörpers aus einer Außenlage, wie z. B. einem Bändchengewebe, und aus wenigstens einer damit verbundenen Beschichtungslage bestehen,
wobei eine Verschließeinrichtung (55) vorgesehen ist, mit welcher nach dem Füllvorgang das Einfüllende (4) mit wenigstens einer Schweißnaht (5) in Querrichtung (24) vollständig dicht verschließbar ist,
wobei eine zusätzliche Schweißeinrichtung (59) vorgesehen ist, und dass die zusätzliche Schweißeinrichtung (59) dazu geeignet und ausgebildet ist, zwei in Querrichtung (24) seitlich voneinander beabstandete und etwa parallel zu der Schweißnaht ausgerichtete zusätzliche Haltenähte (22, 23) in die Seitenfalten (20) der Offensäcke (1) einzubringen, **dadurch gekennzeichnet,**
**dass** die Schweißbackenpaare (60, 61) der zusätzlichen Schweißeinrichtung (59) über ihrer Breite (62) unterschiedliche Querschnitte und/oder Beschichtungen aufweisen, um über der Breite (62) unterschiedliche Schweißtemperaturen zu erzeugen.

2. Packmaschine (30) nach einem der vorhergehenden Ansprüche,
wobei eine Auswahleinrichtung (58) zur Auswahl eines Sackmaterials (12) und wobei in Abhängigkeit von der Auswahl des Sackmaterials (12) die zusätzliche Schweißeinrichtung (59) aktivierbar ist.

3. Packmaschine (30) nach einem der vorhergehenden Ansprüche,
wobei die zusätzliche Schweißeinrichtung (59) zwei in Querrichtung (24) seitlich voneinander beabstandete Schweißbackenpaare (60, 61) aufweist.

4. Packmaschine (30) nach einem der beiden vorhergehenden Ansprüche, wobei die Schweißbackenpaare (60, 61) der zusätzlichen Schweißeinrichtung (60, 61) eine Breite (62) aufweisen, die kleiner ist als eine Tiefe (21) der Seitenfalten (20) der zu füllenden Offensäcke (1).

5. Packmaschine (30) nach einem der vorhergehenden Ansprüche 1 bis 3, wobei die zusätzliche Schweißeinrichtung (59) wenigstens über die Sackbreite (7) ein durchgehendes Schweißband (65) aufweist, das im Bereich (25) der Seitenfalten (20) einen größeren elektrischen Widerstand als in einem mittleren Abschnitt (10) zwischen den Seitenfalten (20) aufweisen.

6. Packmaschine (30) nach einem der vorhergehenden Ansprüche,
wobei der elektrische Widerstand des Schweißbands (65) über der Tiefe (21) der Seitenfalten (20) in einem äußeren Abschnitt (66) kleiner als in einem inneren Abschnitt (67) ist.

7. Packmaschine (30) nach einem der vorhergehenden Ansprüche,
wobei wenigstens eine Eckenschweißeinrichtung (34) vorgesehen ist, welche dazu geeignet und ausgebildet ist, wenigstens an dem Einfüllende (4) Eckenschweißnähte (29a, 29) in die Seitenfalten (20) einzubringen.

8. Verfahren zum Füllen von Produkten in mit Seitenfalten (20) versehene Offensäcke (1),
wobei die Offensäcke einen Sackkörper (9) mit einer Sackwandung (2a, 2b) aufweisen und wobei die Sackwandung des Sackkörpers aus einer Außenlage, wie z. B. einem Bändchengewebe, und aus wenigstens einer damit verbundenen Beschichtungslage besteht, wobei die Offensäcke (1) mit einer Fülleinrichtung (53) von einem Einfüllende (4) aus gefüllt werden, und wobei nach dem Füllvorgang das Einfüllende (4) mit wenigstens einer Schweißnaht (5) vollständig dicht verschlossen wird, wobei mit einer zusätzlichen Schweißeinrichtung (59) wenigstens zwei voneinander in Querrichtung seitlich beabstandete und etwa parallel zu der Schweißnaht ausgerichtete zusätzliche Haltenähte (22, 23) in die Seitenfalten (20) der Offensäcke (1) eingebracht werden, und wobei über der Breite (62) der Schweißbackenpaare (60, 61) der zusätzlichen Schweißeinrichtung (59) unterschiedliche Schweißtemperaturen erzeugen werden.

9. Verfahren nach dem vorhergehenden Anspruch, wobei die zusätzlichen Haltenähte (22, 23) nach außen hin elastischer ausgebildet werden.

10. Verfahren nach einem der beiden vorhergehenden Ansprüche,
wobei mit einer Auswahleinrichtung (58) ein Sackmaterial (12) ausgewählt wird und wobei in Abhängigkeit von der Auswahl des Sackmaterials (12) die zusätzliche Schweißeinrichtung (59) aktiviert wird.

11. Offensack (1) mit einem Sackkörper (9) mit zwei Enden (3, 4), wobei sich der Sackkörper (9) zwischen den beiden Enden (3, 4) über eine Länge (6) erstreckt und quer dazu eine Breite (7) aufweist, und wobei der Sackkörper (9) durch eine Sackwandung (2a, 2b) begrenzt wird, und wobei das eine der Enden das Bodenende (3) und das andere der Enden das Einfüllende (4) ist,
wobei die Offensäcke einen Sackkörper (9) mit einer Sackwandung (2a, 2b) aufweisen und wobei die Sackwandung des Sackkörpers aus einer Außenlage, wie z. B. einem Bändchengewebe, und aus wenigstens einer damit verbundenen Beschichtungslage besteht,
wobei wenigstens an dem Einfüllende (4) des Sackkörpers (9) in seitlichen Bereichen (25) Seitenfalten (20) in der Sackwandung (2a, 2b) vorgesehen sind, sodass an dem Einfüllende (4) des Sackkörpers (9) in einem mittleren Abschnitt (10) des Sackkörpers (9) eine vordere (2a) und eine hintere (2b) Sackwandung vorgesehen sind, während in den seitlichen Bereichen (25) an den Seitenfalten (20) jeweils zwei vordere und zwei hintere Sackwandungen (2a, 2b) vorgesehen sind,
und wobei das Bodenende (3) verschlossen ist und wobei das Einfüllende (4) über der vollständigen Breite (7) mit wenigstens einer Schweißnaht (5) vollständig verschlossen ist, **dadurch gekennzeichnet,**
**dass** wenigstens an dem Einfüllende (4) in den seitlichen Bereichen (25) in den Seitenfalten (20) zwei zusätzliche und etwa parallel zu der Schweißnaht ausgerichtete, in Querrichtung (24) seitlich voneinander beabstandete Haltenähte (22, 23) vorgesehen sind, an welchen die zwei vorderen Sackwandungen (2a) und die zwei hinteren Sackwandungen (2b) alle miteinander verbunden sind, wobei die zusätzlichen Haltenähte (22, 23) in Querrichtung (24) des Sackkörpers (9) jeweils wenigstens zwei Nahtabschnitte (26, 27) unterschiedlicher Intensität aufweisen.

12. Offensack (1) nach dem vorhergehenden Anspruch, wobei in den seitlichen Bereichen (25) die zwei vorderen Sackwandungen (2a) durch eine vordere Eckenschweißnaht (29a) verbunden und die zwei hinteren Sackwandungen (2b) durch eine hintere Eckenschweißnaht (29b) verbunden sind, um eine quaderförmige Form des Einfüllendes (4) des Sackkörpers (9) zu ermöglichen.

13. Offensack (1) nach einem der beiden vorhergehenden Ansprüche, wobei an beiden Enden (3, 4) in jeweils beiden seitlichen Bereichen (25) der Seitenfalten (20) jeweils eine zusätzliche Haltenaht (22, 23) vorgesehen ist, wobei die zusätzliche Haltenaht (22, 23) als Schweißnaht ausgeführt ist.

14. Offensack (1) nach einem der vier vorhergehenden Ansprüche, wobei die zusätzliche Haltenaht (22, 23), die in Querrichtung (24) des Sackkörpers (9) wenigstens zwei Nahtabschnitte (26, 27) unterschiedlicher Intensität aufweist, zu dem seitlichen Ende des Sackkörpers (9) hin elastischer ausgebildet ist.

15. Offensack nach einem der sechs vorhergehenden Ansprüche, wobei die zusätzliche Haltenaht (22, 23) näher an dem Einfüllende (4) ist als als die Schweißnaht (5)(Schweiß- oder Klebenaht).

## Claims

1. Packaging machine (30) for filling product (8) into gusseted (20) open-mouth bags (1), including a filling device (53) to fill the open-mouth bags (1) through a filling end (4), wherein the open-mouth bags comprise a bag body (9) having a bag wall (2a, 2b) and wherein the bag wall of the bag body consists of an outer layer, e.g. of ribbon tissue, and at least one coating layer joined thereto,
wherein a closing device (55) is provided with which the filling end (4) can be sealed completely tight after the filling process by means of at least one weld seam (5) in the transverse direction (24),
wherein an additional welding device (59) is provided, and that the additional welding device (59) is suitable and configured to place two additional holding seams (22, 23) in the gussets (20) of the open-mouth bags (1) laterally spaced apart from one another in the transverse direction (24) and oriented approximately parallel to the weld seam, **characterized in that** the pairs of welding jaws (60, 61) of the additional welding device (59) show different cross sections and/or coatings over their width (62) for generating different welding temperatures over the width (62).

2. The packaging machine (30) according to any of the preceding claims wherein a selection device (58) can be activated for selecting a bag material (12) and wherein in dependence on the bag material (12) selected the additional welding device (59) can be activated.

3. The packaging machine (30) according to any of the preceding claims wherein the additional welding device (59) comprises two pairs of welding jaws (60, 61) laterally spaced apart from one another in the transverse direction (24).

4. The packaging machine (30) according to any of the two preceding claims wherein the pairs of welding jaws (60, 61) of the additional welding device (60, 61) have a width (62) that is less than a depth (21) of the gussets (20) of the open-mouth bags (1) intended for filling.

5. The packaging machine (30) according to any of the preceding claims 1 to 3 wherein the additional welding device (59) comprises at least over the bag width (7) a continuous welding strip (65) which in the region (25) of the gussets (20) has a higher electric resistance than in a central section (10) between the gussets (20).

6. The packaging machine (30) according to any of the preceding claims wherein the electric resistance of the welding strip (65) over the depth (21) of the gussets (20) is lower in an outer section (66) than in an inner section (67).

7. The packaging machine (30) according to any of the preceding claims wherein at least one corner welding device (34) is provided which is suitable and configured to place corner weld seams (29a, 29) in the gussets (20) at least at the filling end (4).

8. Method for filling product into gusseted (20) open-mouth bags (1), wherein the open-mouth bags comprise a bag body (9) having a bag wall (2a, 2b) and wherein the bag wall of the bag body consists of an outer layer, e.g. of ribbon tissue, and at least one coating layer joined thereto, wherein the open-mouth bags (1) are filled by means of a filling device (53) through a filling end (4), and wherein after the filling process the filling end (4) is sealed to be entirely tight by way of at least one weld seam (5), wherein an additional welding device (59) places in the gussets (20) of the open-mouth bags (1) at least two additional holding seams (22, 23) laterally spaced apart from one another in the transverse direction (24) and oriented approximately parallel to the weld seam, and wherein different welding temperatures are generated over the width (62) of the pairs of welding jaws (60, 61) of the additional welding device (59).

9. The method according to the preceding claim wherein the additional holding seams (22, 23) are configured to increase in elasticity outwardly.

10. The method according to any of the two preceding claims wherein a selection device (58) selects a bag material (12) and wherein in dependence of the bag material (12) selected the additional welding device (59) is activated.

11. Open-mouth bag (1) having a bag body (9) with two ends (3, 4)
wherein the bag body (9) extends over a length (6) between the two ends (3, 4) and has a width (7) transverse thereto, and
wherein the bag body (9) is enclosed by a bag wall (2a, 2b), and
wherein one of the ends is the bottom end (3) and the other of the ends is the filling end (4),
wherein the open-mouth bags comprise a bag body (9) having a bag wall (2a, 2b) and wherein the bag wall of the bag body consists of an outer layer, e.g. of ribbon tissue, and at least one coating layer joined thereto,
wherein at least the filling end (4) of the bag body (9) is provided with gussets (20) in side regions (25) in the bag wall (2a, 2b) so that the filling end (4) of the bag body (9) is provided with a front (2a) and a rear (2b) bag wall in a central section (10) of the bag body (9) while the gussets (20) in the lateral regions (25) are provided with two each of front and rear bag walls (2a, 2b),
and wherein the bottom end (3) is closed and wherein the filling end (4) is entirely closed over the entire width (7) by means of at least one weld seam (5), **characterized in**
**that** at least the filling end (4) is provided in the side regions (25) in the gussets (20) with two additional holding seams (22, 23) which are oriented approximately parallel to the weld seam and spaced apart in the transverse direction (24), at which the two front bag walls (2a) and the two rear bag walls (2b) are all connected with one another wherein the additional holding seams (22, 23) in the transverse direction (24) of the bag body (9) each show at least two seam sections (26, 27) of different intensities.

12. The open-mouth bag (1) according to the preceding claim wherein in the side regions (25) the two front bag walls (2a) are connected by way of a front corner welding seam (29a) and the two rear bag walls (2b) are connected by a rear corner weld seam (29b) to enable a square shape of the filling end (4) of the bag body (9).

13. The open-mouth bag (1) according to any of the two preceding claims wherein the two ends (3, 4) are provided in both side regions (25) of the gussets (20) with one additional holding seam (22, 23) each, wherein the additional holding seam (22, 23) is configured as a weld seam.

14. The open-mouth bag (1) according to any of the four preceding claims wherein the additional holding seam (22, 23) which comprises at least two seam sections (26, 27) of different intensities in the transverse direction (24) of the bag body (9) is configured at a higher elasticity toward the side edge of the bag body (9).

15. The open-mouth bag according to any of the six preceding claims
wherein the additional holding seam (22, 23) is closer to the filling end (4) than the weld seam (5) (welded or glued seam).

## Revendications

1. Machine d'emballage (30) destinée à verser des produits (8) dans des sacs ouverts (1) pourvus de plis latéraux (20), comprenant un dispositif de remplissage (53) pour remplir les sacs ouverts (1) depuis une extrémité de remplissage (4), dans laquelle les sacs ouverts présentent un corps de sac (9) ayant une paroi de sac (2a, 2b), et dans laquelle la paroi de sac du corps de sac se compose d'une couche extérieure telle que, par exemple, d'un tissu en bandelettes, et d'au moins une couche de revêtement reliée à celle-ci,
dans laquelle un dispositif de fermeture (55) est prévu par l'intermédiaire duquel l'extrémité de remplissage (4) peut être fermée de manière complètement étanche par au moins un cordon de soudure (5) dans le sens transversal (24) après l'opération de remplissage,
dans laquelle un dispositif de soudage (59) supplémentaire est prévu, et ledit dispositif de soudage (59) supplémentaire est adapté et conçu pour réaliser, dans les plis latéraux (20) des sacs ouverts (1), deux soudures de maintien (22, 23) supplémentaires qui sont espacées latéralement l'une de l'autre dans le sens transversal (24) et orientées approximativement parallèlement au cordon de soudure,
**caractérisée par le fait que** les paires de mâchoires de soudage (60, 61) du dispositif de soudage (59) supplémentaire présentent, sur leur largeur (62), des sections transversales et/ou revêtements différents afin de générer des températures de soudage différentes sur la largeur (62).

2. Machine d'emballage (30) selon la revendication précédente, dans laquelle un dispositif de sélection (58) destiné à choisir une matière de sac (12) est prévu, et dans laquelle ledit dispositif de soudage (59) supplémentaire est activable en fonction du choix de la matière de sac (12).

3. Machine d'emballage (30) selon l'une quelconque des revendications précédentes, dans laquelle ledit dispositif de soudage (59) supplémentaire présente deux paires de mâchoires de soudage (60, 61) espacées latéralement l'une de l'autre dans le sens transversal (24).

4. Machine d'emballage (30) selon l'une quelconque des deux revendications précédentes, dans laquelle les paires de mâchoires de soudage (60, 61) du dispositif de soudage (59) supplémentaire présentent une largeur (62) qui est inférieure à une profondeur (21) des plis latéraux (20) des sacs ouverts (1) à remplir.

5. Machine d'emballage (30) selon l'une quelconque des revendications précédentes 1 à 3, dans laquelle le dispositif de soudage (59) supplémentaire présente au moins sur la largeur de sac (7) une bande de soudage (65) continue qui présente une résistance électrique plus importante dans la zone (25) des plis latéraux (20) que dans une portion centrale (10) entre les plis latéraux (20).

6. Machine d'emballage (30) selon l'une quelconque des revendications précédentes, dans laquelle la résistance électrique de la bande de soudage (65) sur la profondeur (21) des plis latéraux (20) est plus faible dans une portion extérieure (66) que dans une portion intérieure (67).

7. Machine d'emballage (30) selon l'une quelconque des revendications précédentes, dans laquelle au moins un dispositif de soudage d'angle (34) est prévu qui est adapté et conçu pour réaliser, au moins à l'extrémité de remplissage (4), des soudures d'angle (29a, 29) dans les plis latéraux (20).

8. Procédé destiné à verser des produits dans des sacs ouverts (1) pourvus de plis latéraux (20),
dans lequel les sacs ouverts présentent un corps de sac (9) ayant une paroi de sac (2a, 2b) et dans lequel la paroi de sac du corps de sac se compose d'une couche extérieure telle que, par exemple, d'un tissu en bandelettes, et d'au moins une couche de revêtement reliée à celle-ci, dans lequel les sacs ouverts (1) sont remplis par l'intermédiaire d'un dispositif de remplissage (53) depuis une extrémité de remplissage (4), et dans lequel l'extrémité de remplissage (4) est fermée de manière complètement étanche par au moins un cordon de soudure (5) après l'opération de remplissage, dans lequel au moins deux soudures de maintien (22, 23) supplémentaires qui sont espacées latéralement l'une de l'autre dans le sens transversal (24) et orientées approximativement parallèlement au cordon de soudure sont réalisées dans les plis latéraux (20) des sacs ouverts (1) par l'intermédiaire d'un dispositif de soudage (59) supplémentaire, et dans lequel des températures de soudage différentes sont générées sur la largeur (62) des paires de mâchoires de soudage (60, 61) du dispositif de soudage (59) supplémentaire.

9. Procédé selon la revendication précédente, dans lequel les soudures de maintien (22, 23) supplémentaires sont réalisées de manière à être plus élastiques vers l'extérieur.

10. Procédé selon l'une quelconque des deux revendications précédentes, dans lequel une matière de sac (12) est choisie au moyen d'un dispositif de sélection (58), et
dans lequel ledit dispositif de soudage (59) supplémentaire est activé en fonction du choix de la matière de sac (12).

11. Sacs ouvert (1) comprenant un corps de sac (9) à deux extrémités (3, 4), dans lequel le corps de sac (9) s'étend entre les deux extrémités (3, 4) sur une longueur (6) et présente, transversalement à ceci, une largeur (7), et dans lequel le corps de sac (9) est délimité par une paroi de sac (2a, 2b), et dans lequel l'une des extrémités est l'extrémité de fond (3) et l'autre des extrémités est ladite extrémité de remplissage (4),
dans lequel les sacs ouverts présentent un corps de sac (9) ayant une paroi de sac (2a, 2b) et dans lequel la paroi de sac du corps de sac se compose d'une couche extérieure telle que, par exemple, d'un tissu en bandelettes, et d'au moins une couche de revêtement reliée à celle-ci,
dans lequel, au moins à l'extrémité de remplissage (4) du corps de sac (9), des plis latéraux (20) sont prévus dans la paroi de sac (2a, 2b) dans des zones latérales (25) de sorte que des parois avant (2a) et arrière (2b) sont prévues à l'extrémité de remplissage (4) du corps de sac (9) dans une portion centrale (10) du corps de sac (9), tandis que deux parois de sac avant et deux parois de sac arrière (2a, 2b) sont prévues respectivement dans les zones latérales (25) sur les plis latéraux (20),
et dans lequel l'extrémité de fond (3) est fermée et dans lequel l'extrémité de remplissage (4) est fermée complètement, sur la largeur (7) totale, par au moins un cordon de soudure (5), **caractérisé par le fait**
**que** deux soudures de maintien (22, 23) supplémentaires qui sont orientées approximativement parallèlement au cordon de soudure et espacées latéralement l'une de l'autre dans le sens transversal (24) sont prévues au moins à l'extrémité de remplissage (4) dans les zones latérales (25) dans les plis latéraux (20), soudures de maintien supplémentaires sur lesquelles sont reliées toutes ensemble les deux parois de sac avant (2a) et les deux parois de sac arrière (2b), les soudures de maintien (22, 23) supplémentaires présentant, dans le sens transversal (24) du corps de sac (9), respectivement au moins deux portions de soudure (26, 27) d'intensité différente.

12. Sac ouvert (1) selon la revendication précédente, dans lequel, dans les zones latérales (25), les deux parois de sac avant (2a) sont reliées par une soudure d'angle avant (29a) et les deux parois de sac arrière (2b) sont reliées par une soudure d'angle arrière (29b) afin de permettre une forme en parallélépipède rectangle de l'extrémité de remplissage (4) du corps de sac (9).

13. Sac ouvert (1) selon l'une quelconque des deux revendications précédentes,
dans lequel une soudure de maintien (22, 23) supplémentaire est prévue respectivement aux deux extrémités (3, 4) dans respectivement les deux zones latérales (25) des plis latéraux (20), dans lequel la soudure de maintien (22, 23) supplémentaire est réalisée en tant que cordon de soudure.

14. Sac ouvert (1) selon l'une quelconque des quatre revendications précédentes,
dans lequel ladite soudure de maintien (22, 23) supplémentaire qui présente au moins deux portions de soudure (26, 27) d'intensité différente dans le sens transversal (24) du corps de sac (9) est réalisée de manière à être plus élastique vers l'extrémité latérale du corps de sac (9).

15. Sac ouvert (1) selon l'une quelconque des six revendications précédentes, dans lequel ladite soudure de maintien (22, 23) supplémentaire est située plus près de l'extrémité de remplissage (4) que le cordon de soudure (5) (soudure ou joint collé).
